# EUROPEAN PATENT APPLICATION

(11) **EP 1 858 141 A2**
(43) Date of publication of application: **21.11.2007**
(21) Application number: 07101755.2
(22) Date of filing: 05.02.2007
(51) Int. Cl.: H02K 33/16

(54) **Actuator and two-dimensional scanner**

(30) Priority: 18.05.2006 KR 20060044637
(71) Applicant: Samsung Electronics Co., Ltd., Suwon-si, Gyeonggi-Do (KR)
(72) Inventor: Jeong, Hee-Moon, Gyeonggi-do (KR); Shin, Seong-ho, Gyeonggi-do (KR); Lee, Jin-ho, Gyeonggi-do (KR); Cho, Jin-woo, Gyeonggi-do (KR); Ko, Young-chul, Gyeonggi-do (KR)
(74) Representative: Greene, Simon Kenneth

(57) **Abstract**

An actuator and a two dimensional scanner. The actuator and the two dimensional scanner include a base plate, a movable plate pivoted around at least one of a first imaginary axis or a second imaginary axis which are perpendicular to each other, a magnetic field-producing portion forming a magnetic force which acts in a direction parallel to the second axis and has a minimum size at a position of the first axis, a support member disposed coaxially with at least one of the first axis and the second axis, connecting the base plate and the movable plate, and forming a pivoting axis of the movable plate, and a driving coil portion to which a driving power of the movable plate is applied and disposed on the movable plate so as to have a point symmetry shape with respect to an intersecting point of the first axis and the second axis.

## Description

### BACKGROUND OF THE INVENTION

Apparatus consistent with the present invention relate to an actuator and a two dimensional scanner, and more particularly, to an actuator that operates by an electromagnetic force acting between a magnet and a coil, and a two dimensional scanner.

Actuators and two dimensional scanners are display devices for scanning and displaying a one dimensional light signal, such as a bar code or a two dimensional light signal, such as a moving visible image. Actuators and two dimensional scanners have been used in a variety of ways, such as for reading devices which read a one dimensional light signal arranged on a straight line or a two dimensional light signal arranged on a plane to provide binary data. In this regard, actuators and scanners are used in various devices, such as beam protectors, portable projectors, fiber optic gyroscopes, image readers, and other display devices.

Two dimensional devices, for example, actuators and two dimensional scanners, may include a mirror portion for reflecting light, which is pivoted in horizontal and vertical directions and scans a light signal, thereby generating a visible image in a frame unit on a certain plane. When the mirror portion is pivoted with a horizontal frequency and a vertical frequency and scans a light signal in horizontal and vertical directions, a plurality of unit frames (e.g., where the unit frames are implemented by one cycle pivoting in a vertical direction of the mirror portion) having a plurality of scan lines (e.g., where the plurality of scan lines are implemented by pivoting corresponding to a horizontal frequency of the mirror portion) are scanned per unit time so that a moving image (e.g., where the moving image is implemented by pivoting corresponding to horizontal and vertical frequencies of the mirror portion) with a high resolution can be implemented.

The scanner shown in FIG. 1 is disclosed in U.S. Patent No. 5,912,608. Referring to FIG. 1, a scanner body 10 is disposed between a pair of magnets 4 and 5 in a diagonal direction of the magnets 4 and 5. The scanner body 10 includes a substrate 11, an outer movable plate 12A pivoted around a first torsion bar 13A connected to the substrate 11, an inner movable plate 12B pivoted around a second torsion bar 13B, connected to the outer movable plate 12A, perpendicular to the first torsion bar 13A, an outer coil 15A disposed on the outer movable plate 12A, an inner coil 15B disposed on the inner movable plate 12B, an outer coil terminal 14A disposed at both ends of the outer coil 15A, an inner coil terminal 14B disposed at both ends of the inner coil 15B, and a mirror portion 16 disposed on the inner movable plate 12B and reflecting light.

However, since one axis control (e.g., pivot control of the inner movable plate 12B around a direction parallel to the magnetic force) of the inner movable plate 12B is made possible by simultaneously controlling powers applied to the inner coil 15B and the outer coil 15A, without independently controlling a power applied to any one of the inner coil 15B and the outer coil 15A, there is a problem in that a control operation for pivoting the inner movable plate 12B with a desired frequency is complicated.

A control operation during two axis control (pivot control of the inner movable plate 12B around a direction parallel to the magnetic force and a direction perpendicular thereto) is more complicated. That is, the sum of moment forces in the direction parallel to the magnetic force must be controlled by simultaneously controlling the inner coil 15B and the outer coil 15A and the sum of moment forces in the direction perpendicular to the magnetic force must be independently controlled.

In addition, an inclined arrangement of the scanner body 10 causes sizing issues, and a distance in which the magnets 4 and 5 and the scanner body 10 are spaced apart from each other increases so that a component of the moment forces is wasted. Thus, an input (powers applied to the inner coil 15B and the outer coil 15A, respectively) versus an output (a pivoting angle of the inner movable plate 12B) decreases causes a reduction in efficiency.

### SUMMARY OF THE INVENTION

Exemplary embodiments of the present invention provide an actuator in which leakage or disturbance of a magnetic field is prevented or reduced, and pivoting control of a movable plate is effectively performed, such that chip miniaturization and efficiency are promoted.

An exemplary embodiment of the invention provides an electromagnetic actuator comprising a base plate; a movable plate coupled with the base plate; and a pair of magnets which produce a magnetic force in a direction extending from one of the magnets to the other magnet, the movable plate is disposed between the magnets. The movable plate is pivoted around an axis parallel with the direction of the magnetic force. A support member is provided which connects the base plate and the movable plate.

The movable plate comprises a driving coil configuration and the driving coil configuration has point symmetry with respect to a center of the movable plate. An additional axis extends in a direction perpendicular to the direction of the magnet force and through a center of the movable plate, and the driving coil has a portion disposed on one side of the additional axis and another portion disposed on an opposite side of the additional axis, such that the driving coil is asymmetrical with respect to the additional axis. The support member may extend from the movable plate in a direction parallel with the direction of the magnetic force and torsionally deforms when the movable plate is pivoted.

In accordance with another exemplary embodiment, an electromagnetic actuator comprises, a base plate; a movable plate; a support member extended from the movable plate to the base plate; and a pair of magnets which produce a magnetic force in a direction extending from one of the magnets to the other magnet, the movable plate being disposed between the magnets. The movable plate may comprise a driving coil configuration. A first axis extends in a direction perpendicular to the direction of the magnet force and through a middle of the movable plate, and a second axis extends in a direction parallel to the direction of the magnetic force, such that the driving coil has a first portion disposed on one side of the first axis and a second portion disposed on an opposite side of the first axis, and the first portion and the second portion are asymmetrical with respect to the first axis.

The support member may comprise two portions extended respectively from opposing sides of the movable plate in a direction orthogonal to the direction of the magnetic force, such that the support member torsionally deforms when the movable plate is pivoted.

It is also contemplated that the driving coil has driving power, and the driving power comprises, overlappingly, a first frequency and a second frequency coinciding with a natural frequency of the movable plate, such that the movable plate is pivoted around the first axis with the first frequency and is resonantly pivoted around the second axis with the second frequency. The driving coil configuration may further comprise an outer coil portion extended in an elliptical manner around the first and second portions. The first portion, the second portion and the outer portion comprise a single driving coil. On the other hand, the outer coil portion may comprise a driving coil separate from the first portion and the second portion.

A further exemplary embodiment provides an electromagnetic actuator comprising, a base plate; an outer movable plate; a first set of support members extended from the outer movable plate to the base plate; an inner movable plate; and a second set of support members extended from the inner movable plate to the outer movable plate. The inner movable plate comprises an inner driving coil configuration and the outer movable plate comprises an outer driving coil configuration. A first axis extends through the first set of support members, and a second axis extends through the second set of support members, such that the inner driving coil configuration has a portion disposed on one side of the first axis and another portion disposed on an opposite side of the first axis, and the inner driving coil configuration is asymmetrical with respect to the first axis.

A pair of magnets is provided to produce a magnetic force in a direction extending from one of the magnets to the other magnet, and the inner movable plate and the outer movable plate are disposed between the magnets. It is also contemplated that the inner driving coil configuration and the outer driving coil configuration comprise a driving power having, overlappingly, a first frequency and a second frequency coinciding with a natural frequency of the inner movable plate, such that the inner and outer movable plates are pivoted around the first axis with the first frequency and the inner movable plate is resonantly pivoted around the second axis with the second frequency. The outer driving coil configuration is extended in an elliptical manner around the inner driving coil configuration.

In accordance with another exemplary embodiment, an electromagnetic actuator comprises, a base plate; an outer movable plate; a first set of support members extended from the outer movable plate to the base plate; an inner movable plate; a second set of support members extended from the inner movable plate to the outer movable plate; and a first driving coil configuration disposed on the outer movable plate. A first axis extends through the first set of support members, and a second axis extends through the second set of support members, such that the first driving coil configuration of the outer movable plate has a portion disposed on one side of the first axis and another portion disposed on an opposite side of the first axis, and the first driving coil configuration is asymmetrical with respect to the first axis. The first set of support members may extend from the outer movable plate in a direction orthogonal to the direction of the magnetic force and the second set of support members may extend from the inner movable plate in a direction parallel with the direction of the magnetic force.

It is further contemplated that the first driving coil configuration comprises driving power overlappingly having a first frequency and a second frequency coinciding with a natural frequency of the outer movable plate, such that the outer movable plate is pivoted around the first axis with the first frequency and is resonantly pivoted around the second axis with the second frequency, and a resonant movement of the outer movable plate is transmitted to the inner movable plate. A second driving coil configuration may also be provided that is extended in an elliptical manner around the first driving coil configuration. A vibration suppression plate may be disposed between the outer movable plate and the inner movable plate, wherein the first driving coil configuration comprises a driving power with an overlapping first frequency and a second frequency, and the vibration suppression plate suppresses a pivoting component of the second frequency.

### BRIEF DESCRIPTION OF THE DRAWINGS

The above and other aspects of the present invention will become more apparent by describing in detail exemplary embodiments thereof with reference to the attached drawings in which:

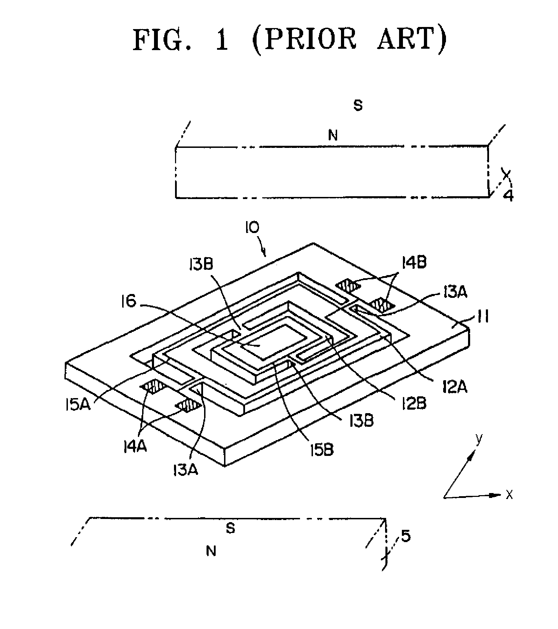

FIG. 1 is a perspective view of a conventional scanner;
FIGS. 2A through 2C illustrate a two dimensional scanning method according to an exemplary embodiment of the present invention;
FIG. 3 is a plan view of a magnetic field-producing portion according to an exemplary embodiment of the present invention;
FIG. 4 is a plan view of main portions of an actuator having a support member positioned coaxially with a second axis according to an exemplary embodiment of the present invention;
FIG. 5 is a plan view of main portions of an actuator having a support member positioned coaxially with a first axis according to another exemplary embodiment of the present invention;
FIG. 6 is a plan view of main portions of an actuator of an exemplary embodiment having a second driving coil portion;
FIG. 7 is a plan view of main portions of an actuator of an exemplary embodiment in which the first driving coil portion and the second driving coil portion comprise coils with different strands;
FIG. 8 is a plan view of main portions of an actuator according to another exemplary embodiment of the present invention;
FIG. 9 is a plan view of main portions of a two dimensional scanner according to another exemplary embodiment of the present invention;
FIG. 10 is a plan view of main portions of a two dimensional scanner having a vibration-suppressing plate according to another exemplary embodiment of the present invention; and
FIG. 11 is a perspective view illustrating a scanner corresponding to an exemplary embodiment.

### DETAILED DESCRIPTION OF THE INVENTION

The present invention will now be described more fully with reference to the accompanying drawings, in which exemplary embodiments of the invention are shown.

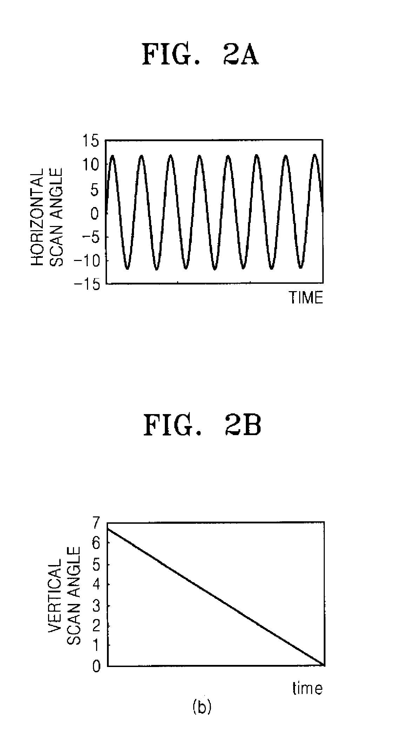

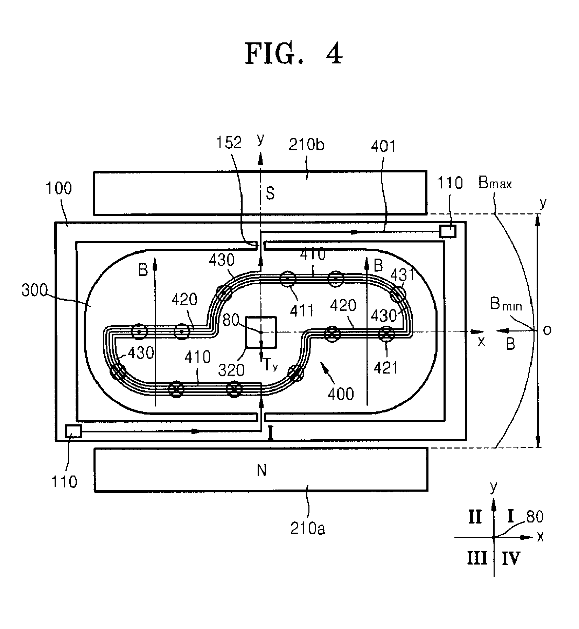

FIGS. 2A through 2C illustrate aspects of a two dimensional scanning method according to an exemplary embodiment of the present invention. In FIG. 2A, the vertical axis denotes the horizontal scan angle and the horizontal axis denotes time. Referring to FIG. 4, which will be described later, a mirror portion 320 is disposed on a central portion of a movable plate 300 and reflects a light signal. Here, the horizontal scan angle is a pivoting angle of a movable plate (see, 300 of FIG. 4) around a second axis. A horizontal frequency is applied, which is a rotative frequency of the movable plate 300 around the second axis and is higher than a vertical frequency. For example, the movable plate 300 is cyclically pivoted in a forward direction and in a reverse direction with a horizontal frequency of 25 kHz in the range of a horizontal scan angle of-15°~15°.

In FIG. 2B, the vertical axis denotes a vertical scan angle and the horizontal axis denotes time. Here, the vertical scan angle is a pivoting angle of the movable plate 300 around a first axis. A vertical frequency is applied, which is a pivoting frequency of the movable plate 300 around the first axis and is lower than the horizontal frequency. For example, the movable plate 300 is cyclically pivoted in a forward direction and in a reverse direction with a vertical frequency of 60 Hz in the range of a vertical scan angle of 0° ~ 7°.

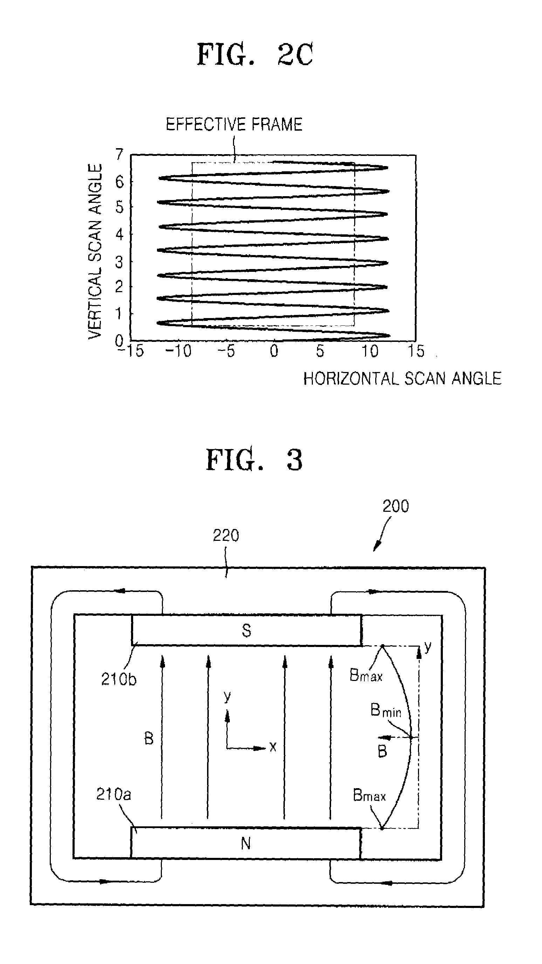

In FIG. 2C, the vertical axis denotes a vertical scan angle of the movable plate 300 and the horizontal axis denotes a horizontal scan angle of the movable plate 300. When the movable plate is simultaneously pivoted by both a horizontal scan angle and a vertical scan angle, a visible image in one frame is formed. An edge of a frame, in which distortion of a scan line is present, may be discarded so that only an effective frame region is used as a display region. When the horizontal frequency is 25 kHz and a vertical frequency is 60 Hz, one effective frame comprises about 400, or 25000/60, scan lines that are displayed 60 times per second so that a visible image with a high resolution is provided. Here, detailed dimensions of the horizontal scan angle, the vertical scan angle, the horizontal frequency, and the vertical frequency are just exemplified for explanatory conveniences and do not limit exemplary embodiments of the present invention.

FIG. 3 is a plan view of a magnetic field-producing portion 200 according to an exemplary embodiment of the present invention. Referring to FIG. 3, the magnetic field-producing portion 200 includes a pair of magnets 210a and 210b. The magnetic field-producing portion 200 also includes a yoke 220. Hereinafter, a first axis refers to a direction perpendicular to a magnetic force line, which coincides with an x-axis direction, and a second axis that crosses the first axis at a right angle refers to a direction parallel to the magnetic force line, which coincides with a y-axis direction.

The magnetic field-producing portion 200 has a minimum magnetic force at a position along the first axis, while also producing a magnetic force in a direction parallel to the second axis. The yoke 220 prevents the magnetic force from leaking and induces the magnetic force in the y-axis direction. The size of the magnetic force has a minimum value Bₘᵢₙ along the first axis at the intersecting point of the first axis and the second axis, increases in a direction towards the magnets 210a and 210b along the second axis and has a maximum value Bₘₐₓ on the surfaces of the magnets 210a and 210b.

FIG. 4 is a plan view of main portions of an actuator having a support member 152 positioned coaxially with the second axis according to an exemplary embodiment of the present invention. A base plate 100, a movable plate 300, magnets 210a and 210b, and a driving coil portion 400 are also shown in FIG. 4. Hereinafter, the yoke (220 in FIG. 3) disposed around the magnets 210a and 210b is omitted for explanatory conveniences. The base plate 100 is fixed on an actuator main body (not shown). A terminal portion 110 to which the end of the driving coil portion 400 is connected and through which a driving signal is input and output is disposed on the base plate 100. A pair of magnets 210a and 210b are disposed around the movable plate 300, such that the magnetic field-producing portion (200 in FIG. 3) and a magnetic force in a direction parallel to the second axis acts on the movable plate 300. The size of the magnetic force has a minimum value at the intersecting point 80 of the first axis and the second axis and has a maximum value on the surfaces of the magnets 210a and 210b.

The movable plate 300 may be pivoted around at least one of the first axis and the second axis. In the case of the movable plate 300 of FIG. 4, the movable plate 300 is pivoted around the second axis so that the movable plate 300 can be a one dimensional actuator. While a one dimension embodiment is discussed in regard to Figure 4, it is not limited to such and could be embodied in the two dimensional configurations discussed in detail below. If the movable plate 300 is simultaneously pivoted around the first axis and the second axis, the movable plate 300 is a two dimensional actuator. The support member 152 is disposed coaxially with the second axis and is a pivoting shaft of the movable plate 300. The support member 152 is torsionally deformed according to a pivoting direction of the movable plate 300 and may be made of a material having elasticity.

The driving coil portion 400 includes a coaxial portion 420, a spaced portion 410, and a connection portion 430. The driving coil portion 400 is disposed on the movable plate 300 so as to have a point symmetry or origin symmetry shape with respect to the intersecting point 80 of the first axis and the second axis. A driving power of the movable plate 300 is applied to the driving coil portion 400. The coaxial portion 420 is disposed coaxially with the first axis, and the spaced portion 410 is spaced apart from the coaxial portion 420 by a predetermined distance along the direction of the second axis. The coaxial portion 420 and the spaced portion 410 may have a linear shape in which the coaxial portion 420 and the spaced portion 410 are spaced apart from each other to be parallel to each other. The connection portion 430 connects the coaxial portion 420 and the spaced portion 410. The connection portion 430 may have a curved shape and connects the coaxial portion 420 and the spaced portion 410, and in particular, the connection portion 430 may have a circular-arc shape with a predetermined curvature.

The spaced portion 410 may be extended parallel to the first axis starting from a position where the spaced portion 410 is spaced apart from the intersecting point 80 of the first axis and the second axis in the direction of the second axis, and the connection portion 430 may extend in the circular-arc shape until it reaches the first axis, starting from the end of the spaced portion 410. The coaxial portion 420 may have the same length as the spaced portion 410 and extend toward the intersecting point 80 of the first axis and the second axis while starting from the end of the connection portion 430. Thus, the driving coil portion 400 may include a plurality of the spaced portions 410, a plurality of the connection portions 430, and a plurality of the coaxial portions 420, which are connected to one another, so that the driving coil portion 400 is disposed in a closed curve shape which forms a point symmetry with respect to the intersecting point 80 of the first axis and the second axis.

The movable plate 300 is pivoted around the second axis, which is parallel with the magnetic force direction. That is, if a direction of a magnetic force and a direction of a current (clockwise, as shown in FIG. 4) is as shown in FIG. 4, an electromagnetic force 431 in a positive z-axis direction is generated in the spaced portion 410 and the connection portion 430 positioned, respectively, on a first quadrant I and a second quadrant II, and an electromagnetic force in the positive z-axis direction is also generated in the coaxial portion 420 positioned coaxially with a negative x-axis. An electromagnetic force 421 in a negative z-axis direction is generated in the spaced portion 410 and the connection portion 430 positioned on a third quadrant III and a fourth quadrant IV, and an electromagnetic force 421 in the negative z-axis direction is also generated in the coaxial portion 420 positioned coaxially with a positive x-axis.

A moment force T_{y} around the second axis will now be described with reference to the spaced portion 410, the coaxial portion 420, and the connection portion 430 positioned on the first quadrant I and the fourth quadrant IV. The movable plate 300 is pivoted around the second axis by a rotative moment generated due to a size gradient of a magnetic force along the second axis and an arrangement shape of the driving coil portion 400.

That is, since the size of the magnetic force is minimum at the position of the coaxial portion 420, an electromagnetic force generated in the coaxial portion 420 is smaller than an electromagnetic force generated in the spaced portion 410. Since the size profile of the magnetic force applied on the connection portion 430 positioned on the first quadrant I is substantially equal to that on the fourth quadrant IV, an electromagnetic force generated in the connection portion 430 positioned on the first quadrant I is substantially equal to that on the fourth quadrant IV. However, the connection portion 430 positioned on the first quadrant I is farther from the second axis than the connection portion 430 positioned on the fourth quadrant IV. Thus, the sum of rotation moment by electromagnetic forces generated in the first quadrant I and the fourth quadrant IV acts in the positive z-axis direction, and the sum of rotation moment by electromagnetic forces generated in the second quadrant II and the third quadrant III acts in the negative z-axis direction, and the movable plate 300 is pivoted around the second axis from the right to the left.

If the shape of the driving coil portion 400 is as shown in FIG. 4, the size of the moment force T_{y} around the second axis is changed according to a size gradient of a magnetic force.

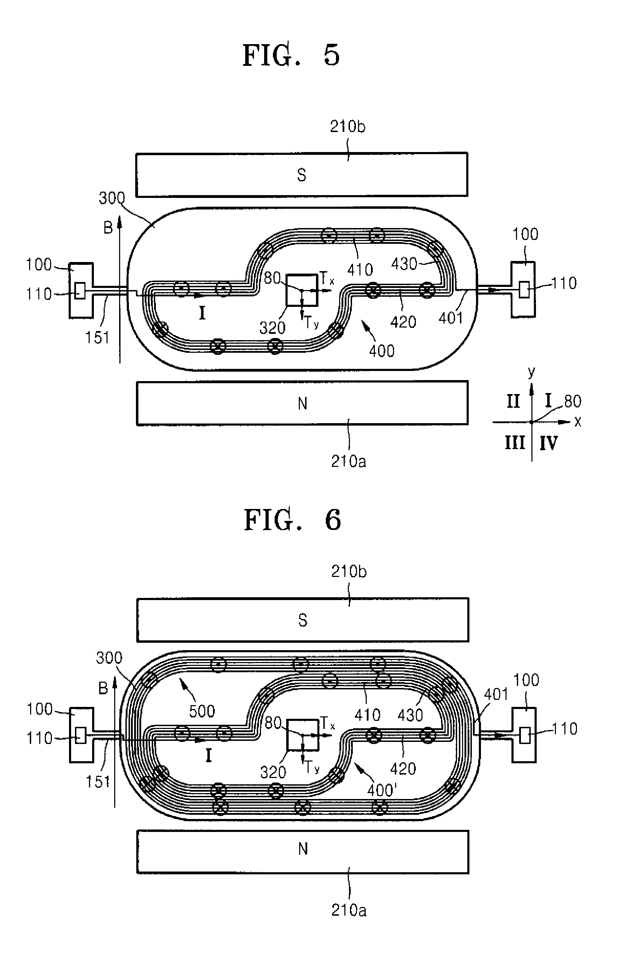

FIG. 5 is a plan view of main portions of an actuator having a support member 151 positioned coaxially with the first axis according to another exemplary embodiment of the present invention. The same reference numerals used in FIG. 4 denote the same elements in Figure 5. The movable plate 300 of FIG. 5 is a one dimensional actuator when it is pivoted around the first axis. In addition, the movable plate 300 of FIG. 5 is a two dimensional actuator when it is simultaneously pivoted around the first axis and the second axis. The support member 151 of FIG. 5 supports the first axis and is disposed coaxially with the first axis to elastically connect the base plate 100 and the movable plate 300. The support member 151 acts as a pivoting shaft of the movable plate 300. The first axis support member 151 is bendingly deformed when the movable plate 300 is pivoted around the second axis, and is torsionally deformed when the movable plate 300 is pivoted around the first axis.

The electromagnetic force generated in the coaxial portion 420 does not affect a moment force Tₓ around the first axis. Since the electromagnetic forces generated in the spaced portion 410 and the connection portion 430 are symmetrical with the first axis, according to the Fleming's left rule, it is natural that the moment force Tₓ around the first axis is generated.

The movable plate 300 may be pivoted around one of the first axis and the second axis by resonance such that it is pivoted around the first axis and the second axis with different frequencies. A driving power for pivoting the movable plate 300 is applied to the driving coil portion 400. The driving power overlappingly has a first frequency and a second frequency (which coincides with a natural frequency with respect to second axis pivoting of the movable plate 300) is applied to the driving coil portion 400 so that the movable plate 300 is pivoted around the first axis with the first frequency and is pivoted around the second axis with the second frequency by resonance.

If a driving power having a single frequency is input to the driving coil portion 400 prepared by coils 401 with the same strand, the movable plate 300 is pivoted around the first axis and the second axis with the same frequency. If a driving power overlappingly having two or more frequencies is input to the driving coil portion 400, the movable plate 300 may be pivoted around the first axis and the second axis with different frequencies. For example, when the first frequency and the second frequency overlap in the driving power and the natural frequency with respect to pivoting around the second axis of the movable plate 300 coincides with the second frequency, the movable plate 300 is pivoted around the first axis with the first frequency and is pivoted around the second axis with the second frequency by resonance. Due to the frequency overlap of the driving power, a pivoting component of the second frequency around the first axis exists, but the pivoting component of the second frequency which is a relatively high frequency may be ignored as noise with respect to the first frequency. A pivoting component of the first frequency around the second axis exists, but the amplitude (which refers to a pivoting angle in a forward direction and in a reverse direction) of the first frequency is smaller than the amplitude of the second frequency by resonance around the second axis and thus may be ignored.

When the driving coil portion 400 is prepared by coils 401 with two strands, while not being limited to such, it is possible to have an embodiment in which a driving power having the first frequency is input to one driving coil portion and a driving power having the second frequency is input to the other coil portion. Even in this case, the movement of the movable plate 300 around the first axis and the second axis may be the same as described above.

FIG. 6 is a plan view of main portions of an exemplary actuator similar to the exemplary embodiment of FIG. 5, while further having a second driving coil portion 500. The same reference numerals as those of FIG. 5 denote the same elements in FIG. 6 and, thus, a repeated description of construction and operation will be omitted. The actuator of FIG. 6 further includes the second driving coil portion 500. The second driving coil portion 500 is disposed around a first driving coil portion 400', that is, it is disposed in an elliptical shape around the intersecting point 80 of the first axis and the second axis. If a clockwise current is applied to the second driving coil portion 500, a electromagnetic force of one-side based on the first axis acts in the positive z-axis direction, and electromagnetic force of the other-side based on the first axis acts in the negative z-axis direction and forms an x-axis symmetry with the electromagnetic force of the one-side, and the movable plate 300 is pivoted around the first axis from the upward to downward direction.

If the first driving coil portion 400' and the second driving coil portion 500 are prepared by coils 401 with the same strand, ends of the first driving coil portion 400' and the second coil 500 are connected to the same terminal portion 110. In addition, a driving power overlappingly having a first frequency and a second frequency (which coincides with a natural frequency with respect to second axis pivoting of the movable plate 300) is applied to the first driving coil portion 400' and the second driving coil portion 500, so that the movable plate 300 is pivoted around the first axis with the first frequency and is pivoted around the second axis with the second frequency by resonance. Since a moment force Tₓ around the first axis is generated by both the first driving coil portion 400' and the second driving coil portion 500, the second driving coil portion 500 increases the first axis moment force Tₓ. A moment force T_{y} around the second axis is generated only by the first driving coil portion 400'.

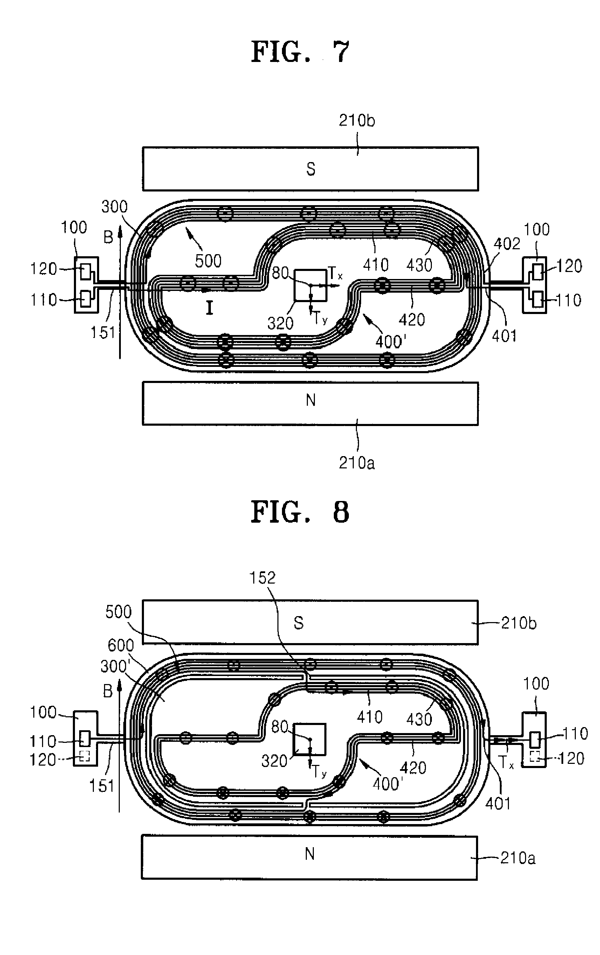

FIG. 7 is a plan view of main portions of an actuator in which the driving coil portion 400' and the second driving coil portion 500, of FIG. 6, are prepared by coils 401 and 402 with different strands. The same reference numerals as those of FIG. 6 denote the same elements in FIG. 7 and, thus, a repeated description of construction and operation will be omitted. The first driving coil portion 400' and the second driving coil portion 500 may be prepared by the coils 401 and 402 formed from different strands so that driving powers having different frequencies can be independently applied to the first driving coil portion 400' and the second driving coil portion 500.

A driving power having a first frequency is applied to the second driving coil portion 500 and a driving power having a second frequency (which coincides with a natural frequency with respect to second axis pivoting of the movable plate 300) is applied to the first driving coil portion 400', respectively, such that the movable plate 300 is pivoted around the first axis with the first frequency and is pivoted around the second axis with the second frequency by resonance.

On the base plate 100, a terminal portion 110 may be provided to which both ends of the first driving coil portion 400' are connected, and a second terminal portion 120 may be provided to which both ends of the second driving coil portion 500 are connected.

FIG. 8 is a plan view of main portions of an actuator having a second movable plate 600 according to another exemplary embodiment of the present invention. The same reference numerals as those of FIG. 7 denote the same elements in FIG. 8 and, thus, a repeated description of construction and operation will be omitted. The actuator of FIG. 8 includes a base plate 100, a pair of magnets 210a and 210b, the second movable plate 600, a first movable plate 300', a first driving coil portion 400', a second driving coil portion 500 and a first axis support member 151. The second movable plate 600 is pivoted around the first axis support member 151. The first axis support member 151 elastically connects the base plate 100 and the second movable plate 600 and acts as a pivoting shaft of the second movable plate 600. The first movable plate 300' is positioned inside the second movable plate 600 and is pivoted around the second axis support member 152. The second axis support member 152 elastically connects the second movable plate 600 and the first movable plate 300' and acts as a pivoting shaft of the first movable plate 300'. The first axis support member 151 and the second axis support member 152 may be independently torsionally deformed according to pivoting directions of the second movable plate 600 and the first movable plate 300'. That is, the first axis support member 151 may be bendingly deformed when the second movable plate 600 and the first movable plate 300' are pivoted around the first axis, and second axis pivoting of the second movable plate 600 may be suppressed by the first axis support member 151, and the second axis support member 152 may be torsionally deformed when the first movable plate 300' is pivoted around the second axis.

The first driving coil portion 400' is disposed on the first movable plate 300' and includes a coaxial portion 420, a spaced portion 410, and a connection portion 430. The second driving coil portion 500 is disposed on the second movable plate 600, that is, it is disposed in an elliptical shape around the intersecting point 80 of the first axis and the second axis.

The first movable plate 300' is pivoted on the second axis by a rotative moment generated due to a size gradient of a magnetic force along the second axis and an arrangement shape of the first driving coil portion 400'. The second movable plate 600 and the first movable plate 300' are pivoted around the first axis by an electromagnetic force generated in the first driving coil portion 400' and the second driving coil portion 500.

The first driving coil portion 400' and the second driving coil portion 500 may comprise coils 401 with the same strand. If driving powers having a single frequency are applied to the first driving coil portion 400' and the second driving coil portion 500, the second movable plate 600 and the first movable plate 300' will be pivoted with the same frequency. Driving powers overlappingly having a first frequency and a second frequency (which coincides with a natural frequency with respect to second axis pivoting of the first movable plate 300') are applied to the first driving coil portion 400' and the second driving coil portion 500, the second movable plate 600 and the first movable plate 300' are pivoted around the first axis with the first frequency and the first movable plate 300' is pivoted around the second axis with the second frequency by resonance. The base plate 100 may include a terminal portion 110 which applies a power to the first driving coil portion 400'.

The first driving coil portion 400' and the second driving coil portion 500 can be prepared by coils 401 and 402 with different strands so that driving powers having different frequencies can be independently applied to the first driving coil portion 400' and the second driving coil portion 500. The driving power having the first frequency is applied to the second driving coil portion 500 and the driving power having the second frequency coinciding with a natural frequency of the first movable plate 300' is applied to the first driving coil portion 400', respectively, such that the second movable plate 600 and the first movable plate 300' are pivoted around the first axis with the first frequency, and the first movable plate 300' is pivoted around the second axis with the second frequency by resonance. The base plate 100 may further include a second terminal portion 120 which applies a power to the second driving coil portion 500.

A mirror portion 320 may be disposed on the first movable plate 300'. For example, the second movable plate 600 is cyclically pivoted in a forward direction and in a reverse direction with a vertical frequency of 60 Hz in the range of a vertical scan angle of 0°-7°. The vertical frequency refers to the first frequency. The natural frequency with respect to second axis pivoting of the first movable plate 300' is 25 kHz. The first movable plate 300' is pivoted by resonance in a forward direction and in a reverse direction with a horizontal frequency of 25 kHz in the range of a horizontal scan angle of - 15° - 15°. The horizontal frequency refers to the second frequency. The second movable plate 600 and the first movable plate 300' are pivoted with the vertical frequency and the first movable plate 300' is pivoted with the horizontal frequency. In this case, as shown in FIGS. 2A through 2C, one effective frame comprises about 400 (that is 25000/60) scan lines which are displayed 60 times per second so that a visible image having a high resolution is provided. The first movable plate 300' may be used in a variety of fields other than the two dimensional scanner device described above.

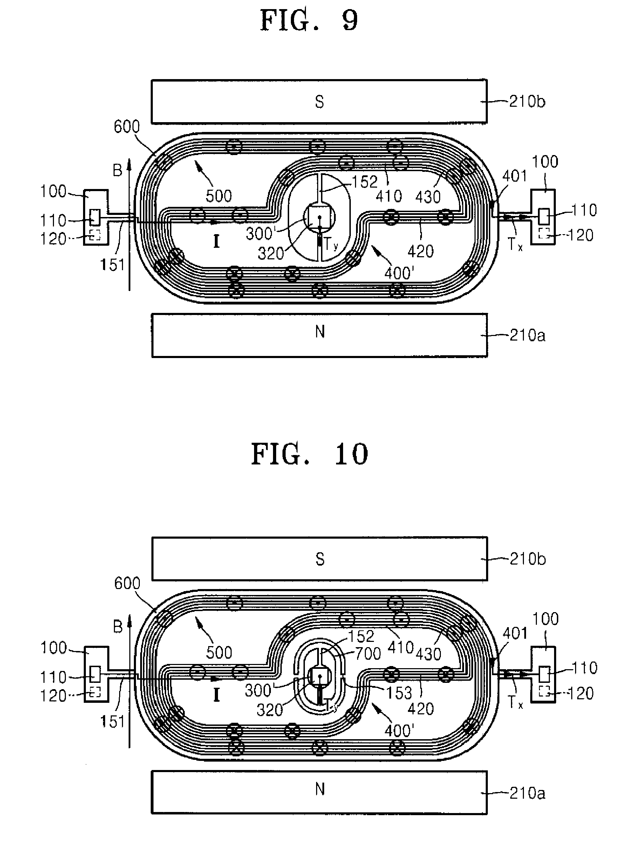

FIG. 9 is a plan view of main portions of a two dimensional scanner according to an exemplary embodiment of the present invention. The same reference numerals as those of FIG. 8 denote the same elements in FIG. 9 and, thus, a repeated description of construction and operation will be omitted. The two dimensional scanner of FIG. 9 may include a base plate 100, a pair of magnets 210a and 210b, a second movable plate 600, a first movable plate 300', a second driving coil portion 500 and a first driving coil portion 400' disposed on the second movable plate 600.

The second movable plate 600 is pivoted around a first axis support member 151 connected to the base plate 100 coaxially with the first axis. The first movable plate 300' is positioned inside the second movable plate 600, and includes a mirror portion 320 which reflects light, and is pivoted around a second axis support member 152 connected to the second movable plate 600 coaxially with the second axis. The first driving coil portion 400' is disposed to have a point symmetry with respect to the intersecting point 80 of the first axis and the second axis, and includes a coaxial portion 420 disposed coaxially with the first axis, a spaced portion 410 spaced apart from the coaxial portion 420 in a direction of the second axis, and a connection portion 430 connecting the coaxial portion 420 and the spaced portion 410. A second driving coil portion 500 may be provided which is disposed around the first driving coil portion 400', that is, it is disposed around the intersecting point 80 of the first axis and the second axis in an elliptical shape.

The construction and operation of the first driving coil portion 400' and the second driving coil portion 500 are the same as described above. The movement of the first movable plate 300' with respect to a vertical scan angle and a vertical frequency and the movement of the first movable plate 300' with respect to a horizontal scan angle and a horizontal frequency are also the same as described above. A difference between FIG. 9 and FIG. 8 is that, in FIG. 9, the first driving coil portion 400' is disposed on the second movable plate 600. Due to this difference, the size and rotative inertia of the first movable plate 300' can be reduced and the natural frequency of the first movable plate 300' can be increased compared to FIG. 8.

As described above, the same driving power overlappingly having the first frequency and the second frequency may be input to the first driving coil portion 400' and the second driving coil portion 500 or independent driving powers each having the first frequency and the second frequency may be input to the first driving coil portion 400' and the second driving coil portion 500, and the first movable plate 300' may be pivoted around the first axis and the second axis with different frequencies.

For example, when the natural frequency of the first movable plate 300' with respect to second axis pivoting of the first movable plate 300' coincides with the second frequency and the first axis support member 151 and the second axis support member 152 can be only torsionally deformed, the second movable plate 600 and the first movable plate 300' are pivoted around the first axis with the first frequency and are pivoted around the second axis with the second frequency by resonance. Due to frequency overlap of the driving power, a pivoting component of the second frequency around the first axis exists, but the component of the second frequency which is a relatively high frequency may be ignored as noise with respect to the first frequency. A pivoting component of the first frequency around the second axis exists, but the amplitude of the first frequency (which refers to a pivoting angle in a forward direction and in a reverse direction) is smaller than the amplitude of the second frequency by resonance around the second axis and thus may be ignored.

FIG. 10 is a plan view of main portions of a two dimensional scanner having a vibration-suppressing plate 700 according to another exemplary embodiment of the present invention. The vibration-suppressing plate 700 is positioned inside the second movable plate 600 and is pivoted around an intermediate support member 153 connected to the second movable plate 600 coaxially with the first axis. The first movable plate 300' is positioned inside the vibration-suppressing plate 700, and includes a mirror portion 320 which reflects light. The movable plate 300' is pivoted around a second axis support member 152 connected to the vibration-suppressing plate 700 coaxially with the second axis. The first driving coil portion 400' is disposed on the second movable plate 600.

In the embodiments prior to FIG. 9, when both driving powers having a first frequency (which is a vertical frequency of FIG. 6, for example, 60 Hz) and a second frequency (which is a horizontal frequency of FIG. 6, for example, 25 kHz) are applied to the first driving coil portion 400' and the second driving coil portion 500, a pivoting component of the second frequency (25 kHz) around the first axis exists, but a component of the second frequency which is a relatively high frequency is ignored as noise with respect to the first frequency.

The pivoting component of the second frequency around the first axis acts on the second movable plate 600 may be ignored. However, preferably, but not necessarily, a component that acts on the first movable plate 300' is removed. The vertical frequency of a light signal is affected not by pivoting of the second movable plate 600, but by pivoting of the first movable plate 300'. When the first movable plate 300' is pivoted around the first axis with the first frequency (for example, 60 Hz) and with the second frequency (for example, 25 kHz), by removing a component of 25 kHz that overlaps the vertical frequency using the vibration-suppressing plate 700, a scan quality can be greatly improved. That is, with respect to the first movable plate 300' pivoted around the first axis in the state where the first frequency and the second frequency overlap, the vibration-suppressing plate 700 suppresses a pivoting component of the second frequency.

The actuator or two dimensional scanner according to exemplary embodiments of the present invention may have a very small damping ratio. In general, a frequency (for explanatory conveniences, referred to as a critical frequency) in which the size of the frequency response when the damping ratio ξ approaches 0 is 1 is √2*wₙ*. When an exciting frequency of a general vibration system is larger than the critical frequency, the size of the frequency response is smaller than 1. Thus, a vibration-suppressing effect can be expected. An exemplary embodiment of the present invention provides for the critical frequency of the entire system, adding the vibration-suppressing plate 700 to the first movable plate 300' and the second movable plate 600, to be smaller than the exciting frequency of the general vibration system, which will be described in detail.

The natural frequency ωₙ of the vibration-suppressing plate 700 with respect to pivoting around the first axis may be larger than the first frequency and may be smaller than the second frequency. Here, the natural frequency of the vibration-suppressing plate 700 with respect to pivoting around the first axis may be equal to or less than 70% (that is, 1/√2) of the second frequency.

This is because the critical frequency of the entire system adding the vibration-suppressing plate 700, should be smaller than the second frequency as described above so as to suppress the magnitude of the frequency response at the second frequency, which is an exciting frequency. This means that the mass moment of inertia of the first movable plate 300' is ignored and thus the natural frequency of the vibration-suppressing plate 700 (which corresponds to 70% of the critical frequency) is equal to or less than 70% of the second frequency. And, the natural frequency of the vibration-suppressing plate 300 is larger than the first frequency, so as to prevent the frequency response of the first movable plate 300' from damping.

For example, the natural frequency of the vibration-suppressing plate 700 may be 8kHz, which is larger than 60 Hz and is equal to or less than 70% of 25 kHz which is the second frequency. Thus, the vibration-suppressing plate 700 is a low pass filter which passes pivoting in the band of the first frequency and suppress the vibration in the band of the second frequency with respect to pivoting of the first movable plate 300' around the first axis.

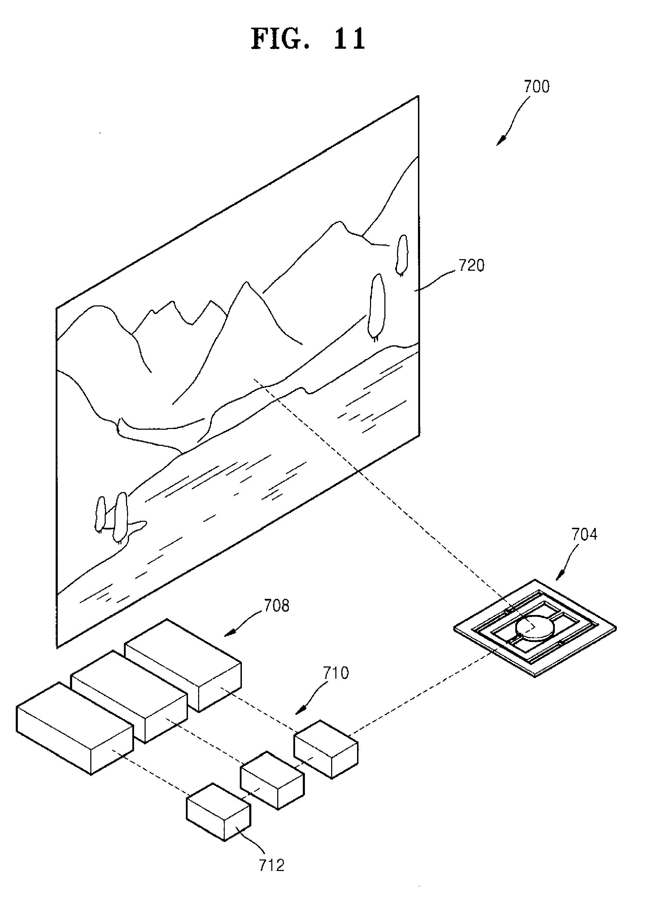

An actuator system 700 according to an exemplary embodiment is illustrated in FIG. 11. The system comprises an actuator 704, such as those described in regard to the above exemplary embodiments. Compact lasers with modulators 708 are operative to provide RGB light 710 to micro-optic devices 712. The light is combined by the micro-optic devices 712 and directed to the actuator 704. The actuator 704 is operated in the manner discussed above with regard to the exemplary embodiments, such that light 710 is scanned on a screen 720.

As described above, actuators and two dimensional scanners according to the exemplary embodiments of the present invention, since a pair of magnets and a yoke maybe disposed, leakage or disturbance of a magnetic field may be prevented, a frequency-overlapping power or independent driving powers with different frequencies is or are applied to the driving coil portion and the second driving coil portion such that pivoting control of the movable plate is easily performed, the shape of the driving coil portion or the arrangement of the second movable plate and the movable plate is innovatively improved such that chip miniaturization is possible and power consumption is reduced, and a pivoting component of the second frequency of the movable plate is suppressed by the vibration-suppressing plate such that a scan quality is greatly improved.

While exemplary embodiments of the present invention have been particularly shown and described with reference to exemplary embodiments thereof, it will be understood by those of ordinary skill in the art that various changes in form and details may be made therein without departing from the spirit and scope of the present invention as defined by the following claims. For example, the actuator and the two dimensional scanner are very suitable for be implemented as a semiconductor chip-shaped micro scanner using a micro electro mechanical system (MEMS) process

## Claims

1. An electromagnetic actuator comprising,
a base plate (100);
a movable plate (300) coupled with the base plate (100); and
a pair of magnets (210a, 210b) adapted to produce a magnetic force in a direction extending from one (210a) of the magnets to the other (210b) magnet, the movable plate (300) being disposed between the magnets,
wherein the movable plate (300) is pivoted around an axis parallel with the direction of the magnetic force.

2. The electromagnetic actuator of claim 1, further comprising a support member (152) which is arranged to connect the base plate (100) and the movable plate (300).

3. The electromagnetic actuator of claim 1 or 2, wherein the movable plate (300) comprises a driving coil configuration (400).

4. The electromagnetic actuator of claim 3, wherein the driving coil configuration (400) has point symmetry with respect to a center (80) of the movable plate (300).

5. The electromagnetic actuator of claim 3 or 4, wherein an additional axis extends in a direction perpendicular to the direction of the magnet force and through a center (80) of the movable plate (300), and the driving coil configuration (400) has a first portion disposed on one side of the additional axis and second portion disposed on an opposite side of the additional axis, such that the driving coil configuration (400) is asymmetrical with respect to the additional axis.

6. The electromagnetic actuator of any of claims 2 to 5, wherein the support member (152) extends from the movable plate (300) in a direction substantially parallel with the direction of the magnetic force.

7. The electromagnetic actuator of any of claims 2 to 6, wherein the support member is arranged to torsionally deform when the movable plate (300) is pivoted.

8. The electromagnetic actuator of any preceding claim, wherein a reflector is provided on the movable plate.

9. An electromagnetic actuator according to claim 1,
wherein the movable plate (300) comprises a driving coil configuration (400), and
wherein a first axis extends in a direction perpendicular to the direction of the magnet force and through a middle (80) of the movable plate (300), and a second axis extends in a direction parallel to the direction of the magnetic force, such that the driving coil configuration (400) has a first portion disposed on one side of the first axis and a second portion disposed on an opposite side of the first axis, and the first portion and the second portion are asymmetrical with respect to the first axis.

10. The electromagnetic actuator of claim 9, comprising a support machine member (152) extending from the movable plate to the base plate and having two portions extending respectively from opposing sides of the movable plate (300).

11. The electromagnetic actuator of claim 9 or 10, wherein the driving coil configuration has point symmetry with respect to a center (80) of the movable plate (300).

12. The electromagnetic actuator of claim 9, 10 or 11, comprising a the support member extending from the movable plate (300) in a direction orthogonal to the direction of the magnetic force.

13. The electromagnetic actuator of any of claims 9 to 12, having a support member that is adapted to torsionally deform when the movable plate is pivoted.

14. The electromagnetic actuator of any of claims 9 to 13, wherein the driving coil has driving power, and the driving power comprises, overlappingly, a first frequency and a second frequency coinciding with a natural frequency of the movable plate, such that the movable plate is pivoted around the first axis with the first frequency and is resonantly pivoted around the second axis with the second frequency.

15. The electromagnetic actuator of any of claims 9 to 14, wherein the driving coil configuration further comprises an outer coil portion extended in an elliptical manner around the first and second portions.

16. The electromagnetic actuator of claim 15, wherein the first portion, the second portion and the outer portion comprise a single driving coil.

17. The electromagnetic actuator of claim 15, wherein the outer coil portion comprises a driving coil separate from the first portion and the second portion.

18. The electromagnetic actuator of any of claims 9 to 17, wherein a reflector is provided on the movable plate.

19. An electromagnetic actuator according to claim 1, wherein the movable base plate comprises,
an outer movable plate;
an inner movable plate; and
a first set of support members extended from the inner movable plate to the outer movable plate;
wherein the inner movable plate comprises an inner driving coil configuration and the outer movable plate comprises an outer driving coil configuration, and
wherein a first axis extends through the first set of support members, and a second axis extends through the second set of support members, such that the inner driving coil configuration has a portion disposed on one side of the first axis and another portion disposed on an opposite side of the first axis, and the inner driving coil configuration is asymmetrical with respect to the first axis.

20. The electromagnetic actuator of claim 19, wherein the inner driving coil configuration has point symmetry with respect to a center of the inner movable plate.

21. The electromagnetic actuator of claim 19, further comprising a second set of support members extending from the outer movable plate in a direction orthogonal to the direction of the magnetic force.

22. The electromagnetic actuator of claim 21, wherein the first set of support members extends from the inner movable plate in a direction parallel with the direction of the magnetic force.

23. The electromagnetic actuator of claim 21 or 22, wherein the second set of support members and the first set of support members are adapted to torsionally deform when the outer movable plate and the inner movable plate are pivoted.

24. The electromagnetic actuator of any of claims 19 to 23, wherein the inner driving coil configuration and the outer driving coil configuration comprise a driving power having, overlappingly, a first frequency and a second frequency coinciding with a natural frequency of the inner movable plate, such that the inner and outer movable plates are pivoted around the first axis with the first frequency and the inner movable plate is resonantly pivoted around the second axis with the second frequency.

25. The electromagnetic actuator of any of claims 19 to 24, wherein the outer driving coil configuration is extended in an elliptical manner around the inner driving coil configuration.

26. The electromagnetic actuator of any of claims 19 to 25, wherein the inner driving coil configuration and the outer driving coil configuration comprise a single driving coil.

27. The electromagnetic actuator of any of claims 19 to 25, wherein the inner driving coil configuration comprises a driving coil and the outer driving coil configuration comprises a separate driving coil.

28. The electromagnetic actuator of any of claims 19 to 27, wherein a reflector is provided on the inner movable plate.

29. The electromagnetic actuator of claim 19, further comprising a vibration suppression plate disposed between the outer movable plate and the inner movable plate,
wherein the outer driving coil configuration comprises a driving power with an overlapping first frequency and a second frequency, and
the vibration suppression plate suppresses a pivoting component of the second frequency.

30. The electromagnetic actuator of claim 29, wherein the second frequency is higher than the first frequency.

31. The electromagnetic actuator of claim 29, wherein the second frequency coincides with a natural frequency of the inner movable plate, and the vibration suppression plate suppresses a pivoting component of the second frequency regarding the pivoting of the inner movable plate around the first axis.

32. The electromagnetic actuator of claim 29, wherein the inner movable plate is resonantly pivoted around the second axis with the second frequency.

33. The electromagnetic actuator of claim 29, wherein the natural frequency of the vibration suppression plate is higher than the first frequency and lower than the second frequency.

34. The electromagnetic actuator of claim 29, wherein the natural frequency of the vibration suppression plate is less than 70% of the second frequency so that the vibration suppression plate acts as a low pass filter against the pivoting of the inner movable plate around the first axis.
